# DEMANDE DE BREVET EUROPEEN

(11) **EP 4 765 598 A1**
(43) Date de publication de la demande: **24.06.2026**
(21) Numéro de dépôt: 25224196.3
(22) Date de dépôt: 17.12.2025
(51) Int. Cl.: H02K 21/16, B64D 27/34, H02K 55/02

(54) **MOTEUR SUPRACONDUCTEUR COMPORTANT DES BOBINES ISOLEES PAR DEUX COUCHES DE VIDE**

(30) Priorité: 19.12.2024 FR 2414572
(71) Demandeur: Airbus (S.A.S.), 31700 Blagnac (FR)
(72) Inventeur: COLLE, Alexandre, 31700 BLAGNAC (FR); DUNOYER, François, 31700 BLAGNAC (FR)
(74) Mandataire: Cabinet Le Guen Maillet

(57) **Abrégé**

Un moteur supraconducteur comporte un rotor, un stator et un boîtier moteur. Le boitier moteur comporte une chambre commune (300) mise au vide et incluant plusieurs compartiments hermétiques (302, 302a, 302b) qui sont aussi mis au vide, chaque compartiment hermétique (302, 302a, 302b) enfermant une ou plusieurs bobines (304, 304a, 304b) du stator, de sorte que la ou les bobines (304, 304a, 304b) que chaque compartiment hermétique (302, 302a, 302b) renferme est isolée thermiquement par deux couches de vide, une première couche de vide (305, 305a, 305b) dans le compartiment hermétique (302, 302a, 302b) en question et une deuxième couche de vide (301) dans la chambre commune (300). Ainsi, d'éventuelles particules qui pourraient se détacher d'une bobine défaillante n'endommagent pas la barrière d'isolation thermique de toute autre bobine qui serait logée dans un autre compartiment.

## Description

### DOMAINE TECHNIQUE

La présente invention se rapporte au domaine général des moteurs supraconducteurs.

### ÉTAT DE LA TECHNIQUE ANTÉRIEURE

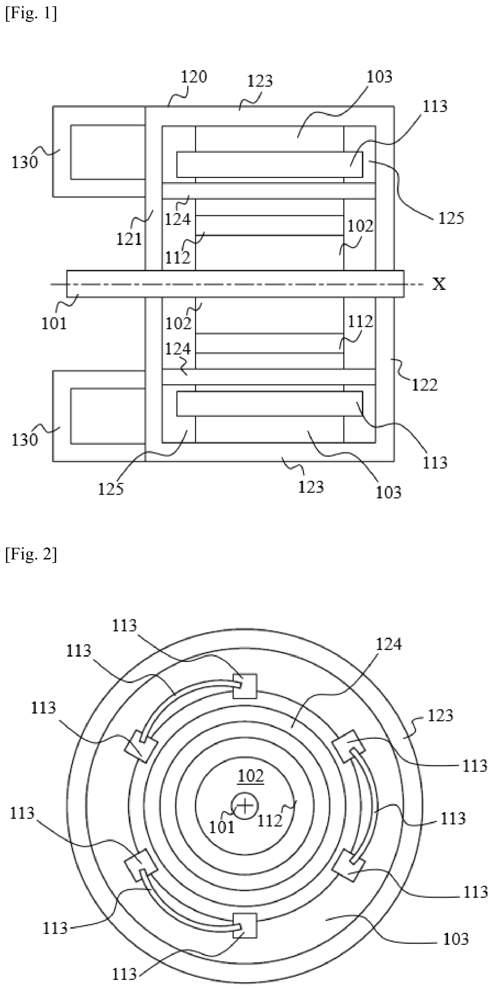

Comme schématiquement illustré sur les Figs. 1 et 2, un moteur supraconducteur de l'état de la technique comporte un rotor 102 qui présente un cœur de rotor réalisé dans un matériau ferromagnétique tel que l'ensemble des alliages de fer utilisés pour les machines électriques. Le cœur de rotor est globalement cylindrique et présente un alésage central dans lequel est emmanché et fixé rigidement un arbre moteur 101. L'arbre moteur 101 est coaxial avec l'axe de révolution du cœur de rotor, en superposition avec l'axe longitudinal X du moteur supraconducteur.

Le rotor 102 comporte également des aimants permanents portés par le cœur de rotor. Il y a plusieurs aimants permanents répartis angulairement et régulièrement en périphérie du cœur de rotor et espacés les uns des autres. Par souci de simplicité, les aimants permanents ne sont pas détaillés sur les Figs. 1 et 2 et sont représentés par un ensemble 112.

Le moteur supraconducteur comporte un stator 103 qui est disposé autour du rotor 102 et qui comporte un cœur de stator réalisé dans un matériau ferromagnétique tel que l'ensemble des alliages de fer utilisés pour les machines électriques. Le cœur de stator prend une forme globalement cylindrique creuse coaxiale avec l'axe longitudinal X.

Le stator 103 comporte un ensemble de plusieurs bobines 113 portées par le cœur de stator et réparties angulairement et régulièrement en périphérie interne du cœur de stator (pour faire face à l'ensemble d'aimants permanents 112) et espacées les unes des autres. Chaque bobine 113 est constituée d'un ruban en matériau supraconducteur. En particulier, le ruban de matériau supraconducteur est enroulé radialement à l'axe longitudinal X de manière à former une dite bobine 113.

Le rotor 102 et le stator 103 sont logés dans un boîtier moteur 120 qui est cylindrique et fermé à ses deux extrémités par des flancs 121, 122 dont au moins un est percé d'un orifice central permettant le passage de l'arbre moteur 101. Le stator 103 est monté fixe à l'intérieur du boîtier moteur 120 tandis que l'ensemble formé par le rotor 102 et l'arbre moteur 101 est monté libre en rotation à l'intérieur du boîtier moteur 120.

En fonctionnement, chaque bobine 113 est alimentée électriquement pour générer un champ magnétique qui interagit avec les aimants permanents entraînant ainsi en rotation le rotor 102 et l'arbre moteur 101. Un circuit d'alimentation électrique et une circuiterie électronique de contrôle de l'alimentation électrique destinée à alimenter électriquement chaque bobine 113 sont installés dans un ou plusieurs boîtiers de contrôle 130, par exemple fixés sur le boîtier moteur 120. Par souci de simplicité, la liaison électrique reliant l'alimentation électrique et chaque bobine 113 n'est pas illustrée sur les Figs. 1 et 2.

Le boîtier moteur 120 comporte une paroi intérieure 124 et une paroi extérieure 123. Par exemple, la paroi intérieure 124 et la paroi extérieure 123 sont sous forme de cylindres qui sont coaxiaux avec l'axe longitudinal X. La paroi intérieure 124 est disposée entre le rotor 102 et le stator 103, et la paroi extérieure 123 est disposée autour du stator 103 (du côté le plus éloigné de l'axe longitudinal X). La paroi intérieure 124 et la paroi extérieure 123 s'étendent entre les deux flancs 121, 122 auxquels lesdites parois sont fixées hermétiquement pour délimiter entre elles 123, 124 et les deux flancs 121, 122, à l'intérieur du boîtier moteur 120, une chambre 125 dans laquelle sont logés le stator 103 et les bobines 113 qu'il porte. Cette chambre 125 est mise au vide et sert d'isolation thermique aux bobines 113 du stator 103.

Si une défaillance d'une bobine 113 devait survenir, des particules de celle-ci pourraient se détacher et un risque d'atteinte aux performances de l'isolation thermique de la chambre 125 pourrait apparaître. Les performances du moteur supraconducteur pourraient s'en trouver dégradées.

Il est alors souhaitable de fournir une solution qui permette d'améliorer les performances du moteur supraconducteur en cas de défaillance d'une bobine.

### EXPOSÉ DE L'INVENTION

A cet effet, il est proposé ici un moteur supraconducteur comportant : un rotor portant des aimants permanents et mobiles en rotation autour d'un axe longitudinal ; un stator portant des bobines destinées à être alimentées électriquement pour générer un champ magnétique entraînant en rotation le rotor grâce aux aimants permanents ; et un boîtier moteur. Le moteur supraconducteur est tel que le boitier moteur comporte une chambre commune mise au vide et incluant plusieurs compartiments hermétiques qui sont aussi mis au vide, chaque compartiment hermétique enfermant une ou plusieurs bobines du stator, de sorte que la ou les bobines que chaque compartiment hermétique renferme est isolée thermiquement par deux couches de vide, une première couche de vide dans le compartiment hermétique en question et une deuxième couche de vide dans la chambre commune.

Ainsi, en séparant les bobines dans des compartiments hermétiques, des particules qui se détacheraient d'une bobine défaillante n'endommageraient pas la barrière d'isolation thermique de toute autre bobine qui serait logée dans un autre compartiment hermétique que celui où est logée la bobine défaillante ni la barrière d'isolation thermique créée par la mise au vide de la chambre commune. Les performances du moteur supraconducteur en cas de défaillance d'une bobine s'en trouvent améliorées.

Dans une réalisation particulière, le moteur supraconducteur est agencé en outre de sorte que chaque bobine est, grâce aux compartiments hermétiques, isolée d'au moins la moitié des bobines du stator.

Dans une réalisation particulière, chaque bobine est logée dans un compartiment hermétique qui lui est dédié parmi lesdits compartiments hermétiques.

Dans une réalisation particulière, les compartiments hermétiques sont faits d'un matériau isolant électrique.

Dans une réalisation particulière, chaque compartiment hermétique a une forme globalement parallélépipédique et comporte une partie récipient et une partie couvercle, et, pour chaque bobine, le récipient comporte des parois internes formant un puits où est logé, au cœur des spires de la bobine en question mais à l'extérieur du compartiment hermétique, un élément de cœur de stator en matériau ferromagnétique.

Dans une réalisation particulière, pour chaque bobine, le récipient comporte, de part et d'autre du puits, deux nervures de maintien adaptées pour maintenir la bobine en place dans le compartiment hermétique.

Dans une réalisation particulière, dans chaque compartiment hermétique, chaque bobine est associée à un élément cryogénique.

Dans une réalisation particulière, l'élément cryogénique est une canalisation le long de la bobine associée, qui est parcourue par un fluide caloporteur.

Il est également proposé un aéronef comprenant au moins un moteur supraconducteur dans l'une quelconque des réalisations présentées ci-dessus.

### BRÈVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant décrite en relation avec les dessins joints, parmi lesquels :
[Fig. 1] montre une vue en coupe simplifiée d'un agencement de moteur supraconducteur selon l'état de la technique ;
[Fig. 2] montre une vue de dessus simplifiée de l'agencement de moteur supraconducteur de la Fig. 1 ;
[Fig. 3] montre une vue en coupe simplifiée montrant un principe de barrière thermique à deux couches de vide ;
[Fig. 4] montre une vue en perspective d'une partie de compartiment hermétique qui permet de réaliser une desdites couches de vide ;
[Fig. 5] montre une vue en coupe simplifiée de compartiment hermétique ;
[Fig. 6] montre une vue en perspective d'une partie de compartiment hermétique qui permet de réaliser une desdites couches de vide, selon un autre agencement ;
[Fig. 7] montre une vue en perspective partielle d'un agencement particulier de raccords d'une bobine et d'un élément cryogénique logés dans un dit compartiment hermétique ; et
[Fig. 8] montre une vue en perspective d'un aéronef comportant au moins un moteur supraconducteur comportant des bobines auxquelles le principe de barrière thermique à deux couches de vide est appliqué.

### EXPOSÉ DÉTAILLÉ DE MODES DE RÉALISATION

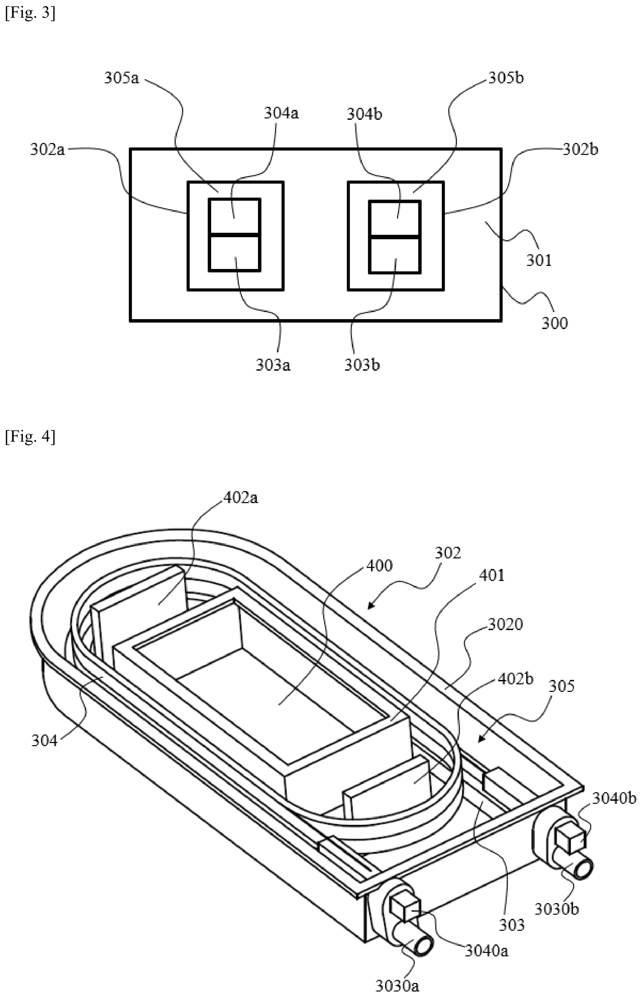

La **Fig. 3** montre une vue en coupe simplifiée montrant un principe de barrière thermique à deux couches de vide.

La Fig. 3 montre schématiquement une chambre commune 300 de boitier moteur. La chambre commune 300 est mise au vide.

La chambre commune 300 inclut plusieurs compartiments hermétiques 302a, 302b qui sont aussi mis au vide.

Chaque compartiment hermétique 302a, 302b enferme une ou plusieurs bobines 304a, 304b du stator, les bobines 304a, 304b étant en matériau supraconducteur.

Le moteur supraconducteur est tel que la ou les bobines 304a, 304b que chaque compartiment hermétique 302a, 302b renferme est isolée thermiquement par deux couches de vide : une première couche de vide 305a, 305b dans le compartiment hermétique 302a, 302b en question, et une deuxième couche de vide 301 dans la chambre commune 300. La première couche de vide 305a, 305b permet d'assurer partiellement la barrière d'isolation thermique utile au fonctionnement des bobines 304a, 304b et plus généralement au moteur supraconducteur, et permet d'assurer que des particules qui se détacheraient d'une bobine 304a, 304b qui serait défaillante n'endommageraient pas la barrière d'isolation thermique de toute autre bobine 304a, 304b qui serait logée dans un autre compartiment hermétique 302a, 302b que celui où est logée la bobine défaillante. Les performances du moteur supraconducteur en cas de défaillance d'une bobine 304a, 304b s'en trouvent améliorées. La deuxième couche de vide 301, dans la chambre commune 300, permet d'assurer, en complément de la première couche de vide 305a, 305b apportée par les compartiments hermétiques 302a, 302b, une complète barrière d'isolation thermique pour l'ensemble des bobines 304a, 304b du stator.

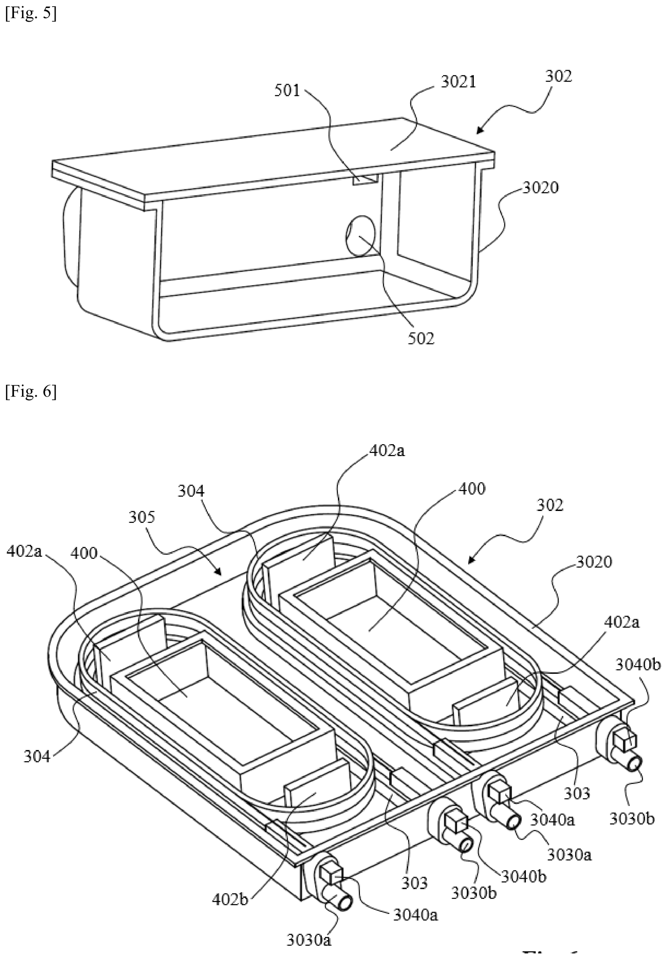

Il convient de noter que chaque compartiment hermétique 302a, 302b peut contenir une ou plusieurs bobines 304a, 304b du stator. Un mode de réalisation particulier de compartiment hermétique 302a, 302b destiné à contenir une seule et unique bobine 304a, 304b est présenté ci-dessous en relation avec la Fig. 4. Une variante destinée à contenir deux bobines est présenté ci-dessous en relation avec la Fig. 6.

Dans une réalisation particulière, le moteur supraconducteur est agencé en outre de sorte que chaque bobine 304a, 304b est, grâce aux compartiments hermétiques 302a, 302b, isolée d'au moins la moitié des bobines du stator. Ainsi, le moteur supraconducteur conserve une partie de sa performance en cas de défaillance d'une bobine du stator.

Dans une réalisation particulière, chaque bobine 304a, 304b dispose de son compartiment hermétique 302a, 302b dédié, l'isolant ainsi de toute autre bobine du stator 103. Ainsi, si une bobine 304a, 304b est endommagée, cela n'impactera pas la barrière d'isolation thermique de chacune des autres bobines du stator 103.

Dans une réalisation particulière, les compartiments hermétiques 302a, 302b sont faits d'un matériau isolant électrique.

Dans une réalisation particulière, chaque bobine 304a, 304b est associée à un élément cryogénique 303a, 303b pour réaliser un échange de chaleur. Par exemple, ces éléments cryogéniques 303a, 303b comportent des canalisations respectivement positionnées le long des bobines 304a, 304b et parcourues par un fluide caloporteur qui provient d'un réservoir de fluide caloporteur (non représenté) et qui est entraîné par tout système approprié comme une pompe. Le fluide caloporteur est par exemple de l'hélium gazeux. Ainsi, dans chaque compartiment hermétique 302a, 302b, la barrière d'isolation thermique est réalisée par une couche de vide enveloppant chaque bobine 304a, 304b et chaque élément cryogénique s'y trouvant.

La **Fig. 4** montre une vue en perspective d'une partie de compartiment hermétique (référencé 302 sur la Fig. 4) qui permet de réaliser ladite première couche de vide (référencée 305 sur la Fig. 4).

Le compartiment hermétique 302 de la Fig. 4 comporte un récipient 3020, dans lequel est logée la bobine (référencée 304 sur la Fig. 4), muni d'un couvercle 3021 (non représenté sur la Fig. 4, mais représenté sur la Fig. 5).

La bobine 304 est par exemple réalisée grâce à un ruban en matériau supraconducteur, enroulé sur lui-même pour former des spires globalement planes. La bobine 304 peut en variante être réalisée grâce à plusieurs rubans juxtaposés parallèles en matériau supraconducteur, enroulés sur eux-mêmes pour former des spires globalement planes. Le récipient 3020 présenté sur la Fig. 4 comporte, en surface de son fond (paroi opposée à une ouverture destinée à accueillir le couvercle 3021), deux nervures (« rib » en anglais) de maintien 402a, 402b, qui sont adaptées pour maintenir la bobine 304 en place dans le compartiment hermétique 302.

Sur la Fig. 4, le récipient 3020 comporte des parois internes 401 formant un puits 400, par exemple de forme rectangulaire, destiné à y loger, au cœur des spires de la bobine 304 mais à l'extérieur du compartiment hermétique 302, un élément de cœur de stator en matériau ferromagnétique. Préférentiellement, comme illustré sur la Fig. 4, les nervures de maintien 402a, 402b se trouvent de part et d'autre du puits 400.

Le récipient 3020 comporte une paroi de raccordement par laquelle est raccordée électriquement la bobine 304. La bobine 304 présente ainsi deux extrémités de raccord 3040a, 3040b qui traversent des orifices respectifs dédiés 501 (voir sur la Fig. 5) de la paroi de raccordement. Sur la Fig. 4 la paroi de raccordement est une paroi latérale par rapport au fond du récipient 3020.

Comme illustré sur la Fig. 4, le récipient 3020 est préférentiellement adapté pour y loger en outre un élément cryogénique destiné à refroidir la bobine 304. Par exemple, une canalisation 303 est juxtaposée à la bobine 304 dans le récipient 3020, la canalisation 303 suivant alors tout ou partie de la forme globalement plane des spires de la bobine 304. Une meilleure efficacité cryogénique et une meilleure gestion d'encombrement sont obtenues en faisant ainsi passer la canalisation cryogénique, dans le compartiment hermétique, le long de la bobine en faisant « le tour du puits ». Alors, la canalisation 303 présente deux extrémités de raccord 3030a, 3030b qui traversent des orifices respectifs dédiés 502 (voir sur la Fig. 5) de la paroi de raccordement.

Les orifices 501, 502 mentionnés ci-dessus apparaissent sur la **Fig. 5****,** qui représente une vue en coupe simplifiée du compartiment hermétique 302 où le couvercle 3021 est aussi représenté. L'assemblage entre le récipient 3020 et couvercle 3021 est tel que l'herméticité du compartiment 302 est assurée. Par exemple, le couvercle 3021 est scellé au récipient 3020 par de la colle ou par soudage (e.g., soudage plastique). De plus, l'assemblage entre la paroi de raccordement et les extrémités de raccord 3040a, 3040b, 3030a, 3030b est tel que l'herméticité du compartiment 302 est assurée, par exemple par une couche de colle.

Le compartiment hermétique 302 de la Fig. 4 a une forme globalement parallélépipédique avec un côté arrondi à l'opposé de la paroi de raccordement pour suivre en substance la forme arrondie des spires de la bobine 304.

Comme déjà indiqué, le compartiment hermétique 302 peut inclure plusieurs bobines 304. Un agencement avec deux bobines coplanaires (côte à côte) est illustré, en vue en perspective sur la **Fig. 6****.** Ainsi, en surface de son fond (paroi opposée à une ouverture destinée à recevoir le couvercle 3021), le récipient 3020 comporte deux jeux de deux nervures (« rib » en anglais) de maintien 402a, 402b, chacun de ces jeux de deux nervures étant adapté pour maintenir une dite bobine 304 en place dans le compartiment hermétique 302. De plus, la paroi de raccordement comporte deux jeux d'orifices 501, 502 tels que précédemment présentés, de sorte à permettre le passage des extrémités de raccord 3040a, 3040b, 3030a, 3030b des deux bobines 304.

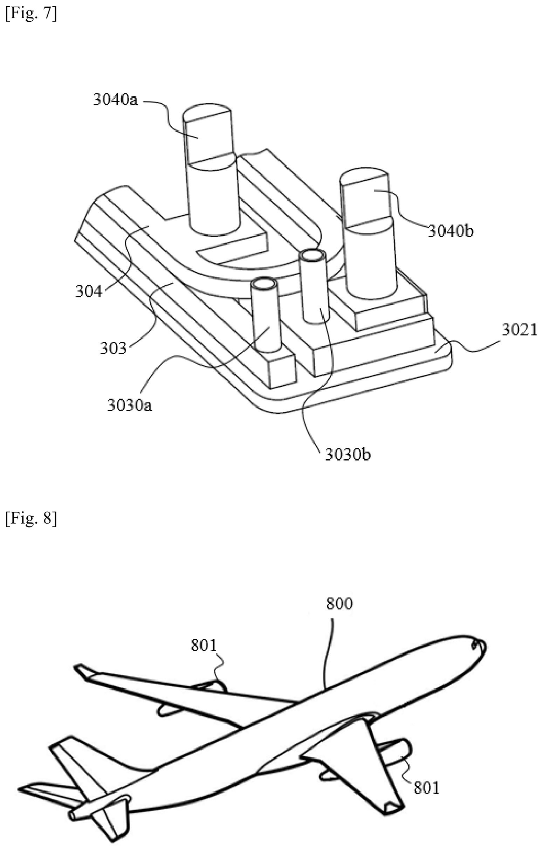

Dans une réalisation en variante, un agencement particulier des extrémités de raccord 3040a, 3040b, 3030a, 3030b, tel que schématiquement illustré en perspective partielle sur la Fig. 7, permet de rendre plus compact le compartiment hermétique 302. Les extrémités de raccord 3040a, 3040b sont alors perpendiculaires au plan (ou aux plans) des spires de la bobine 304.

De même, les extrémités de raccord 3030a, 3030b sont alors perpendiculaires au plan de la canalisation 303. La paroi de raccordement est alors, comme induit par le schéma de la Fig. 7, confondue avec le fond du récipient 3020. En variante équivalent, la paroi de raccordement est alors confondue avec le couvercle 3021.

La **Fig. 8** montre une vue en perspective d'un aéronef 800.

L'aéronef 800 comporte au moins un moteur supraconducteur comportant des bobines auxquelles le principe de barrière thermique à deux couches de vide, selon l'un quelconque des modes de réalisation présentés ci-dessus, est appliqué. Par exemple, l'aéronef 800 utilise un tel moteur supraconducteur dans chaque moteur de propulsion 801, typiquement pour entraîner une hélice en rotation.

## Revendications

1. Un moteur supraconducteur comportant :
- un rotor (102) portant des aimants permanents et mobiles en rotation autour d'un axe longitudinal (X),
- un stator (103) portant des bobines (304, 304a, 304b) destinées à être alimentées électriquement pour générer un champ magnétique entraînant en rotation le rotor (102) grâce aux aimants permanents,
- un boîtier moteur (120),
le moteur supraconducteur étant **caractérisé en ce que** le boitier moteur (120) comporte une chambre commune (300) mise au vide et incluant plusieurs compartiments hermétiques (302, 302a, 302b) qui sont aussi mis au vide, chaque compartiment hermétique (302, 302a, 302b) enfermant une ou plusieurs bobines (304, 304a, 304b) du stator (103), de sorte que la ou les bobines (304, 304a, 304b) que chaque compartiment hermétique (302, 302a, 302b) renferme est isolée thermiquement par deux couches de vide, une première couche de vide (305, 305a, 305b) dans le compartiment hermétique (302, 302a, 302b) en question et une deuxième couche de vide (301) dans la chambre commune (300),
**en ce que** chaque compartiment hermétique (302, 302a, 302b) a une forme globalement parallélépipédique et comporte une partie récipient (3020) et une partie couvercle (3021), et, pour chaque bobine (304, 304a, 304b), le récipient (3020) comporte des parois internes (401) formant un puits (400) où est logé, au cœur des spires de la bobine (304, 304a, 304b) en question mais à l'extérieur du compartiment hermétique (302, 302a, 302b), un élément de cœur de stator en matériau ferromagnétique,.
et **en ce que**, dans chaque compartiment hermétique (302, 302a, 302b), chaque bobine (304, 304a, 304b) est associée à un élément cryogénique (303, 303a, 303b) sous forme d'une canalisation qui est le long de la bobine (304, 304a, 304b) en faisant le tour du puits (400) et qui est parcourue par un fluide caloporteur.

2. Le moteur supraconducteur selon la revendication 1, dans lequel chaque compartiment hermétique (302, 302a, 302b) présente une paroi de raccordement avec des orifices respectifs dédiés (501) pour les extrémités de la bobine et des orifices respectifs dédiés (502) pour les extrémités de ladite canalisation dans ledit compartiment hermétique (302, 302a, 302b).

3. Le moteur supraconducteur selon la revendication 1 ou 2, agencé en outre de sorte que chaque bobine (304, 304a, 304b) est, grâce aux compartiments hermétiques (302, 302a, 302b), isolée d'au moins la moitié des bobines (304, 304a, 304b) du stator (103).

4. Le moteur supraconducteur selon l'une quelconque des revendications 1 à 3, dans lequel chaque bobine (304, 304a, 304b) est logée dans un compartiment hermétique (302, 302a, 302b) qui lui est dédié parmi lesdits compartiments hermétiques (305, 305a, 305b).

5. Le moteur supraconducteur selon l'une quelconque des revendications 1 à 3, dans lequel les compartiments hermétiques (302, 302a, 302b) sont faits d'un matériau isolant électrique.

6. Le moteur supraconducteur selon l'une quelconque des revendications 1 à 4, dans lequel, pour chaque bobine (304, 304a, 304b), le récipient (3020) comporte deux nervures de maintien (402a, 402b), de part et d'autre du puits (400), adaptées pour maintenir la bobine (304, 304a, 304b) en place dans le compartiment hermétique (302, 302a, 302b).

7. Un aéronef (700) comprenant au moins un moteur supraconducteur selon l'une quelconque des revendications précédentes.
